# EUROPEAN PATENT SPECIFICATION

(11) **EP 4 061 772 B1**
(45) Date of publication and mention of the grant of the patent: **20.12.2023**
(21) Application number: 20808129.9
(22) Date of filing: 20.11.2020
(51) Int. Cl.: C01D 15/00, H01M 6/18

(54) **PREPARATION METHOD OF LITHIUM ARGYRODITE**
VERFAHREN ZUR HERSTELLUNG VON LITHIUM-ARGYRODIT
PROCÉDÉ DE PRÉPARATION D'ARGYRODITE LITHIUM

(30) Priority: 20.11.2019 EP 19306492
(43) Date of publication of application: 28.09.2022
(73) Proprietor: SOLVAY SA, 1120 Bruxelles (BE)
(72) Inventor: BRAIDA, Marc-David, 94360 BRY-SUR-MARNE (FR); D'ALENCON, Lauriane, 92130 ISSY-LES-MOULINEAUX (FR); COMPAIN, Jean-Daniel, 92400 COURBEVOIE (FR); LE MERCIER, Thierry, 93110 ROSNY-SOUS-BOIS (FR)
(74) Representative: Ferri, Isabella
(86) International application number: PCT/EP2020/082992
(87) International publication number: WO 2021/099625

(56) References cited:
- US-A1- 2019 074 544
- US-A1- 2019 173 127
- LAIDONG ZHOU ET AL: "Solvent-Engineered Design of Argyrodite Li 6 PS 5 X (X = Cl, Br, I) Solid Electrolytes with High Ionic Conductivity", ACS ENERGY LETTERS, vol. 4, no. 1, 20 November 2018 (2018-11-20), pages 265-270, XP055696186, ISSN: 2380-8195, DOI: 10.1021/acsenergylett.8b01997 -& Laidong Zhou ET AL: "Supporting Information for: Solvent-Engineered Design of Argyrodite Li 6 PS 5 X (X= Cl, Br, I) Solid Electrolytes with High Ionic Conductivity", , 20 November 2018 (2018-11-20), XP055697908, Retrieved from the Internet: URL:https://pubs.acs.org/doi/suppl/10.1021 /acsenergylett.8b01997/suppl_file/nz8b0199 7_si_001.pdf [retrieved on 2020-05-25]
- SUNHO CHOI ET AL: "Application of Rod-Like Li 6 PS 5 Cl Directly Synthesized by a Liquid Phase Process to Sheet-Type Electrodes for All-Solid-State Lithium Batteries", JOURNAL OF THE ELECTROCHEMICAL SOCIETY, vol. 166, no. 3, 19 December 2018 (2018-12-19), pages A5193-A5200, XP055696185, US ISSN: 0013-4651, DOI: 10.1149/2.0301903jes

## Description

The present invention concerns a method for the preparation of lithium argyrodite.

### PRIOR ART

Lithium batteries are used to power portable electronics and electric vehicles owing to their high energy and power density. Conventional lithium batteries make use of a liquid electrolyte that is composed of a lithium salt dissolved in an organic solvent. The aforementioned system raises security questions as the organic solvents are flammable. Lithium dendrites forming and passing through the liquid electrolyte medium can cause short circuit and produce heat, which result in accident that leads to serious injuries.

Non-flammable inorganic solid electrolytes offer a solution to the security problem. Furthermore, their mechanic stability helps suppressing lithium dendrite formation, preventing self-discharge and heating problems, and prolonging the lifetime of a battery.

Solid sulfide electrolytes are advantageous for lithium battery applications due to their high ionic conductivities and mechanical properties. These electrolytes can be pelletized and attached to electrode materials by cold pressing, which eliminates the necessity of a high temperature assembly step. Elimination of the high temperature sintering step removes one of the challenges against using lithium metal anodes in lithium batteries.

There is thus a need for new solid sulfide electrolytes.

Argyrodites have long been known and are derived from argyrodite Ag₈GeS₆, which was described for the first time in 1886 by C. Winkler and the analysis of which led to the discovery of germanium. The argyrodite family consists of more than 100 crystalline solids and includes, for example, those solid-state compounds in which the silver is replaced by copper, the germanium by gallium or phosphorus and the sulfur by selenium. Thus, Nitsche, Kuhs, Krebs, Evain, Boucher, Pfitzner and Nilges describe, inter alia, compounds such as Cu₉GaS₆, Ag₇PSe₆ and Cu₈GaS₅Cl, the solid-state structures of which are derived from argyrodite.

Most of the lithium argyrodites, and in particular most of the Li₆PS₅Cl, as reported in the literature, are prepared via a dry or wet mechanochemical route.

Until today, the all solutions routes proposed in the literature are methods starting mostly from pre-formed Li₃PS₄ dissolved in ethanol, where Li₂S and LiCI are then introduced or methods comprising the dissolution of pre-formed Li₆PS₅Cl.

There exists thus a need for a full solution route for the preparation of a sulfide-based solid electrolyte.

### INVENTION

The aim of the present invention is to provide a method for the synthesis of a sulfide-based solid electrolyte with argyrodite structure being preferably both faster and easier to set up compared to previously described methods.

The aim of the present invention is to provide a new process for the preparation in solution of lithium argyrodite preferably having improved productivity and allowing a control of the morphology of the obtained product.

Thus, the present invention relates to a method for preparing Li₆PS₅X, wherein X is halogen, comprising at least one step for the preparation of a solution S1 at a temperature T1 comprised from -200°C to 10°C, preferably from -110°C to 0°C, said solution S1 comprising a solvent and at least P species under the form of (PS₄)³⁻, Li species under the form of Li⁺, X species under the form of X⁻ and remaining sulfur under the form of polysulfide, followed by a step for removing at least a portion of the solvent from said solution to obtain Li₆PS₅X.

### DEFINITIONS

Throughout this specification, unless the context requires otherwise, the word "comprise" or "include", or variations such as "comprises", "comprising", "includes", including" will be understood to imply the inclusion of a stated element or method step or group of elements or method steps, but not the exclusion of any other element or method step or group of elements or method steps. According to preferred embodiments, the word "comprise" and "include", and their variations mean "consist exclusively of".

As used in this specification, the singular forms "a", "an" and "the" include plural aspects unless the context clearly dictates otherwise. The term "and/or" includes the meanings "and", "or" and also all the other possible combinations of the elements connected to this term.

The term "between" should be understood as being inclusive of the limits.

Ratios, concentrations, amounts, and other numerical data may be presented herein in a range format. It is to be understood that such range format is used merely for convenience and brevity and should be interpreted flexibly to include not only the numerical values explicitly recited as the limits of the range, but also to include all the individual numerical values or sub-ranges encompassed within that range as if each numerical value and sub-range is explicitly recited. For example, a temperature range of about 120°C to about 150°C should be interpreted to include not only the explicitly recited limits of about 120°C to about 150°C, but also to include sub-ranges, such as 125°C to 145°C, 130°C to 150°C, and so forth, as well as individual amounts, including fractional amounts, within the specified ranges, such as 122.2°C, 140.6°C, and 141.3°C, for example.

The term "electrolyte" refers in particular to a material that allows ions, e.g., Li⁺, to migrate therethrough but which does not allow electrons to conduct therethrough. Electrolytes are useful for electrically isolating the cathode and anodes of a battery while allowing ions, e.g., Li⁺, to transmit through the electrolyte. The "solid electrolyte" according to the present invention means in particular any kind of material in which ions, for example, Li⁺, can move around while the material is in a solid state.

The term "electrochemical device" refers in particular to a device which generates and/or stores electrical energy by, for example, electrochemical and/or electrostatic processes. Electrochemical devices may include electrochemical cells such as batteries, notably solid state batteries. A battery may be a primary (i.e., single or "disposable" use) battery, or a secondary (i.e., rechargeable) battery.

It is understood that the term "vehicle" or "vehicular" or other similar term as used herein is inclusive of motor vehicles in general such as passenger automobiles including sports utility vehicles (SUV), buses, trucks, various commercial vehicles, watercraft including a variety of boats and ships, aircraft, and the like, and includes hybrid vehicles, electric vehicles, plug-in hybrid electric vehicles, hydrogen-powered vehicles and other alternative fuel vehicles (e.g. fuels derived from resources other than petroleum). As referred to herein, a hybrid vehicle is a vehicle that has two or more different sources of power, for example both gasoline-powered and electric-powered vehicles.

### DETAILED INVENTION

The method of the invention is based on the preparation of a homogeneous solution comprising ionic species. It thus does not involve a suspension.

All species involved in the preparation of Li₆PS₅X are thus dissolved in a solvent and are in the form of ionic species as mentioned above.

An essential feature of the method of the invention is the temperature T1 as defined above. The method of the invention is thus carried out at a low temperature, notably in order to stabilize the (PS₄)³⁻ species in solution and thus to obtain the solution S1 at the required temperature.

Once the solution S1 is prepared, then a step for removing at least a portion of the solvent is carried out. Then Li₆PS₅X is obtained as a solid, preferably as a powder.

Preferably, the term "at least a portion of the solvent" refers to at least 50% by weight of said solvent, preferably at least 60% by weight.

The P species under the form of (PS₄)³⁻ are preferably obtained from a precursor chosen in the group consisting of: P₂S₅, P₄S₁₀, P₄S₉ and P₄S₉₊ₓ (with 0<x<1).

The Li species under the form of Li⁺ are preferably obtained from a precursor chosen in the group consisting of: Li₂S and LiHS.

The X species under the form of X⁻ are preferably obtained from a precursor chosen in the group consisting of: LiF, LiCI, LiBr and Lil.

The remaining sulfur under the form of polysulfide is preferably obtained from a precursor chosen in the group consisting of: P₂S₅, P₄S₁₀, P₄S₉, P₄S₉₊ₓ (with 0<x<1), Li₂S, S and LiHS.

According to an embodiment, the solution S1 as defined above is obtained by admixing lithium sulfide, phosphorus sulfide, and a halogen compound in the solvent, at a temperature ranging from -200°C to 10°C, preferably from -110°C to 0°C.

According to this embodiment, all the species (Li, P, halogen, and S) are advantageously added together into the solvent at the temperature T1.

According to another embodiment, the solution S1 as defined above is obtained by carrying out the following steps:
- obtaining a precursor solution by admixing lithium sulfide and a halogen compound in the solvent; and
- adding phosphorus sulfide into said precursor solution at a temperature comprised from -200°C to 10°C, preferably from -110°C to 0°C, in order to obtain said solution S1.

According to this embodiment, the solution S1 is prepared in two steps, in which the first step comprising the mixing of the lithium and halogen compounds.

The method of the invention is easy to be implemented, and in particular easier than the prior art method. For example, the lithium sulfide may be used as such even when it is obtained by carboreduction. Indeed, the lithium sulfide obtained from carboreduction that contains residual carbon is to be submitted to a filtration step for removing the carbon and then be used directly in the solvent for the preparation of the solution S1. This eliminates the need for an intermediate lithium sulfide isolation step.

Preferably, the step for removing at least a portion of the solvent from the solution S1 is carried out at a temperature comprised from 30°C to 200°C, preferably from 30°C to 185°C, for instance from 30°C to 100°C. According to an embodiment, this temperature may be comprised from 35°C to 65°C.

The step for removing the solvent may be carried out by implementing conventional means, in particular by solvent evaporation.

This preferred temperature range for the solvent elimination is advantageous in that the secondary reactions are not promoted at such temperature values.

The preparation of the solution S1 may occur in an inert atmosphere, under vacuum or under H₂S flow.

The method of the invention may comprise a further step, notably after the step for removing the solvent, of thermal treatment of Li₆PS₅X. Preferably, after the solvent removal, Li₆PS₅X is then thermally treated at a temperature comprised from 150°C to 700°C, preferably at about 550°C.

Such additional step advantageously thus consists in a thermal treatment of the solid Li₆PS₅X obtained after the solvent removal step.

Preferably, the solvent used in the method of the invention is able to dissolve Li₆PS₅X, lithium sulfide, phosphorus sulfide and a halogen compound. As mentioned above, this solvent thus gives a homogeneous solution S1 as previously defined.

According to a preferred embodiment, the solvent is an aliphatic alcohol. Most preferably, the solvent is chosen in the group consisting of: ethanol, methanol and mixtures thereof.

The temperature T1 is comprised from -200°C to 10°C, preferably from -110°C to 0°C, most preferably from -110°C to -10°C, and in particular from -100°C to - 50°C, notably from -90°C to -70°C. For example, T1 is of about -80°C.

According to a specific embodiment, the temperature used during the step from removing at least a portion of the solvent from the solution S1 is comprised from 35°C to 65°C and the temperature T1 is comprised from -110°C to -10°C, preferably from -100°C to -50°C.

In particular, during the preparation of the solution S1, the temperature T1 remains constant.

Advantageously, the method according to the invention allows much less and even none global and local deviation with respect to the stoichiometry.

Lithium sulfide is generally a compound including one or more of sulfur atoms and one or more of lithium atoms, or alternatively, one or more of sulfur containing ionic groups and one or more of lithium containing ionic groups. In certain preferred aspects, lithium sulfide may consist of sulfur atoms and lithium atoms.

Phosphorus sulfide is generally a compound including one or more of sulfur atoms and one or more of phosphorus atoms, or alternatively, one or more of sulfur containing ionic groups and one or more of phosphorus containing ionic groups. In certain preferred aspects, phosphorus sulfide may consist of sulfur atoms and phosphorus atoms. Examples of phosphorus sulfide may include, but are not limited to, P₂S₅, P₄S₃, P₄S₁₀, P₄S₄, P₄S₅, P₄S₆, P₄S₇, P₄S₈ and P₄S₉.

Halogen compound is a compound including one or more of halogen atoms such as F, Cl, Br, or I via chemical bond (e.g., ionic bond or covalent bond) to the other atoms constituting the compound. In certain preferred aspects, the halogen compound may include one or more of F, Cl, Br, I or combinations thereof, and one or more metal atoms. In other preferred aspects, the halogen compound may include one or more of F, Cl, Br, I or combinations thereof, and one or more non-metal atoms. Non-limiting examples may suitably include metal halide such as LiF, LiBr, LiCI, Lil, NaF, NaBr, NaCl, Nal, KaF, KBr, KCI, KI, and the like. In certain preferred aspects, the halogen compound suitably for the use in a solid electrolyte in all-solid Li-ion battery may include one or more halogen atoms and Li.

Preferably, the lithium sulfide may include or is lithium sulfide Li₂S, and the phosphorus sulfide may include or is phosphorus pentasulfide P₂S₅.

The halogen compound as defined above may be chosen in the group consisting of: LiCI, LiBr, Lil, LiF and combinations thereof. Preferably, said halogen compound is LiCl.

The solution S1 may comprise at least 50% mol. of Li species under the form of Li⁺, with respect to the total amount in moles of lithium sulfide added in the solvent, preferably at least 80% mol. of Li species under the form of Li⁺, more preferably at least 95% mol. of Li species under the form of Li⁺.

The solution S1 may comprise at least P species under the form of (PS₄)³⁻ and (P₂S₇)⁴⁻.

The solution S1 may comprise at least 50% mol. of P species under the form of (PS₄)³⁻, with respect to the total amount in moles of phosphorus sulfide added in the solvent, preferably at least 80% mol. of P species under the form of (PS₄)³⁻, more preferably at least 95% mol. of P species under the form of (PS₄)³⁻,or even at least 99% mol. of P species under the form of (PS₄)³⁻.

The solution S1 may comprise at least 50% mol. of X species under the form of X⁻, with respect to the total amount in moles of halogen compound added in the solvent, preferably at least 80% mol. of X species under the form of X⁻, more preferably at least 95% mol. of X species under the form of X⁻.

Further disclosed is Li₆PS₅X, wherein X is halogen, preferably, Li₆PS₅Cl, susceptible to be obtained by the method as defined above. Li₆PS₅X, preferably Li₆PS₅Cl, is used as solid electrolyte.

Further disclosed is an electrochemical device comprising a Li6PS5X as defined above, a solid state battery, such as an all-solid-state lithium secondary batteries, comprising a solid electrolyte as defined above and a vehicle comprising a solid state battery as defined above.

Typically, a lithium solid-state battery includes a positive electrode active material layer containing a positive electrode active material, a negative electrode active material layer containing a negative electrode active material, and a solid electrolyte layer formed between the positive electrode active material layer and the negative electrode active material layer. At least one of the positive electrode active material layer, the negative electrode active material layer, and the solid electrolyte layer includes a solid electrolyte comprising Li₆PS₅X, preferably Li₆PS₅Cl, as defined above.

### FIGURES

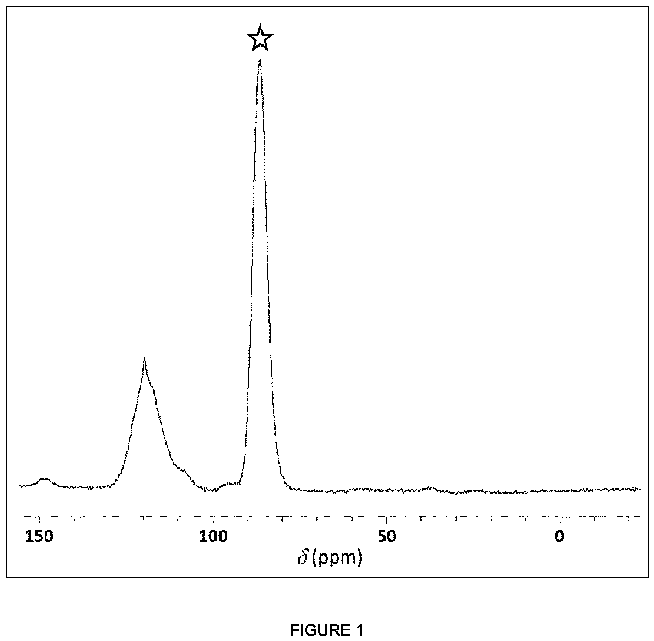

Figure 1: NMR data Li₆PS₅Cl before annealing (example 1). The star corresponds to PS₄^{a-}.

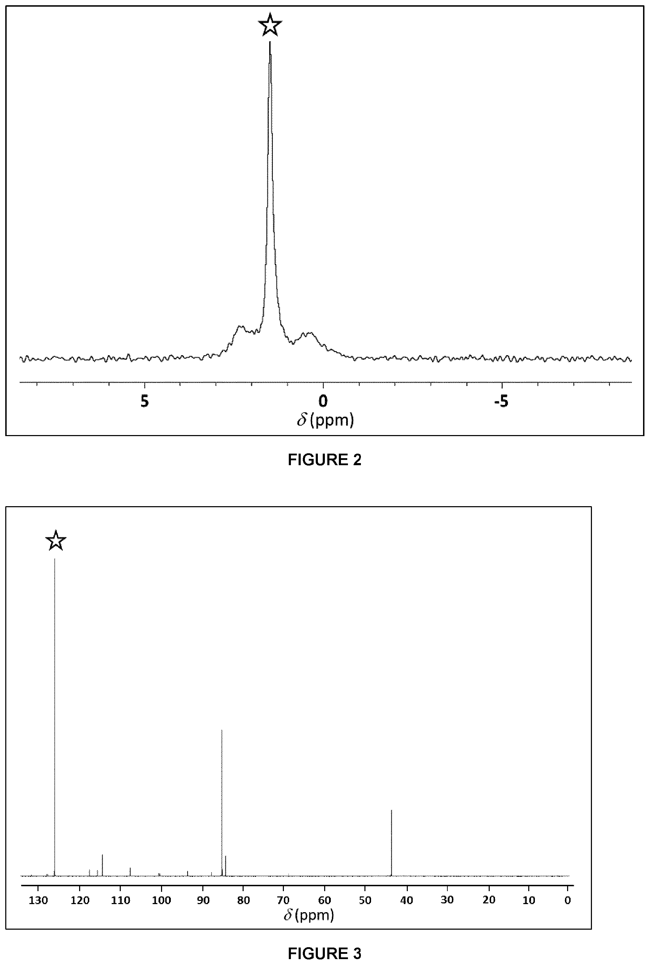

Figure 2: NMR data Li₆PS₅Cl before annealing (example 1). The star corresponds to Li in Li₆PS₅Cl.
Figure 3: Example 1 ³¹P solution NMR of reaction medium (Solution S1) + 10% of DMSO-d6. The star corresponds to PS₄³⁻ solvated by ethanol molecules.

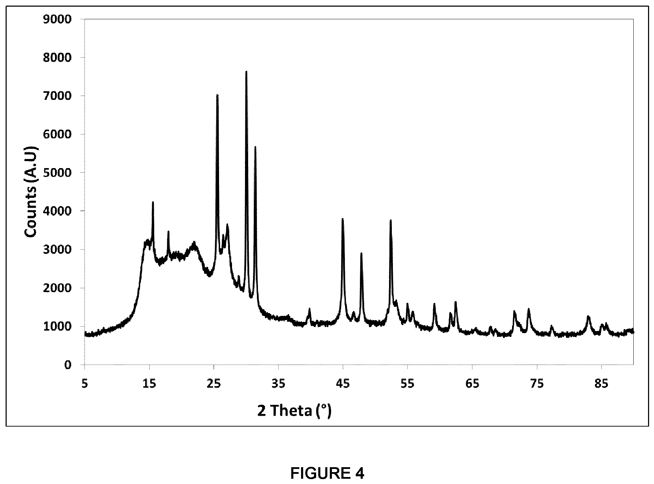

Figure 4: XRD data after synthesis (example 1).

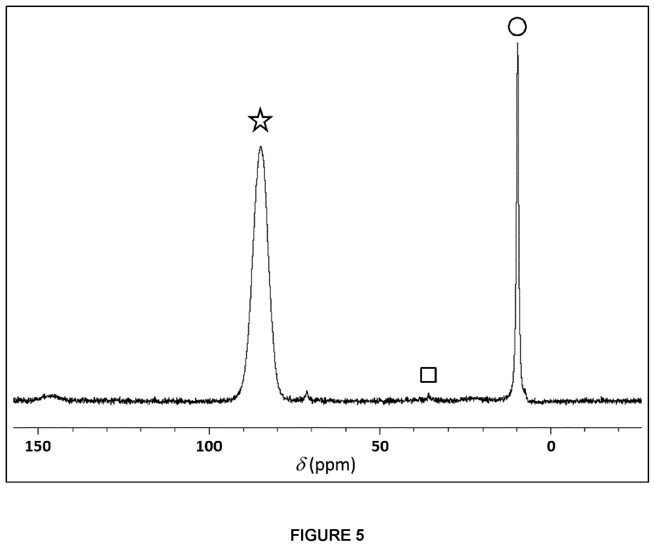

Figure 5: NMR data Li₆PS₅Cl after 550°C annealing (example 2). The star corresponds to PS₄³⁻, the circle corresponds to PO₄³⁻, the square corresponds to partially oxidized thiophosphate, and the other signals are artifacts (spinning sidebands).

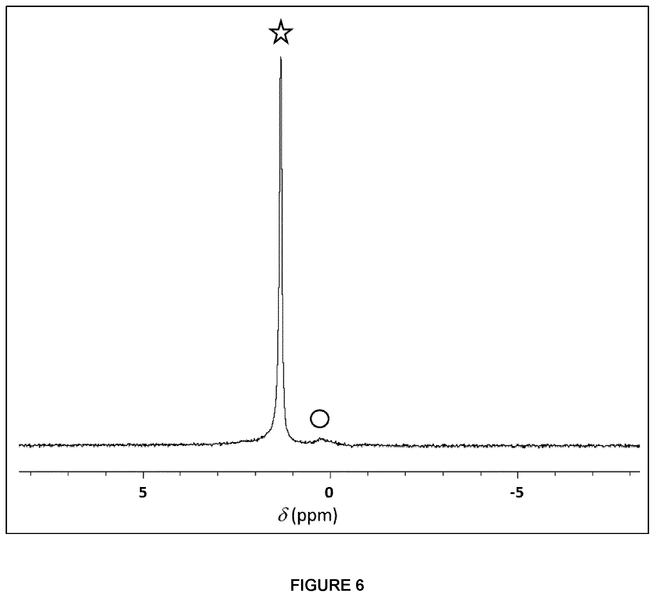

Figure 6: NMR data Li₆PS₅Cl after 550°C annealing (example 2). The star corresponds to Li in Li₆PS₅Cl and the circle corresponds to Li in Li₃PO₄.

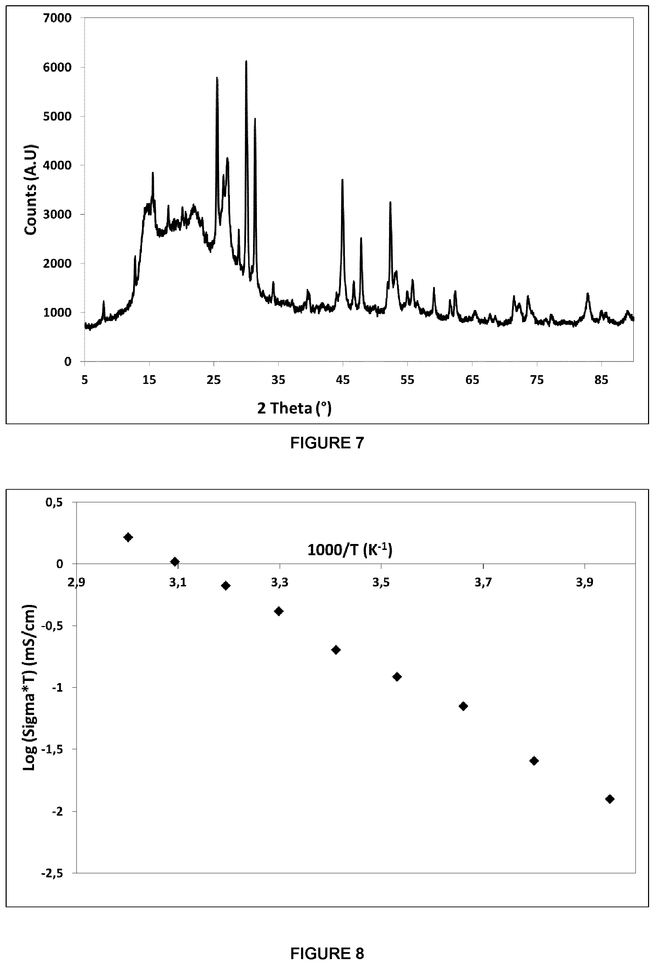

Figure 7: XRD data after annealing at 550°C (example 2).
Figure 8: Conductivity measurements for example 2.
Figure 9: NMR ³¹P data Li₆PS₅Cl (example 3). The star corresponds to PS₄³⁻ and the hexagon corresponds to P₂S₇⁴⁻.
Figure 10: ⁶Li NMR data Li₆PS₅Cl (example 3). The star corresponds to Li in Li₆PS₅Cl and the triangle corresponds to Li₂S.
Figure 11: 31P solution NMR of reaction medium (Solution S1) + 10% of DMSO-d6 (example 3). The star corresponds to PS₄³⁻ solvated by ethanol molecules.

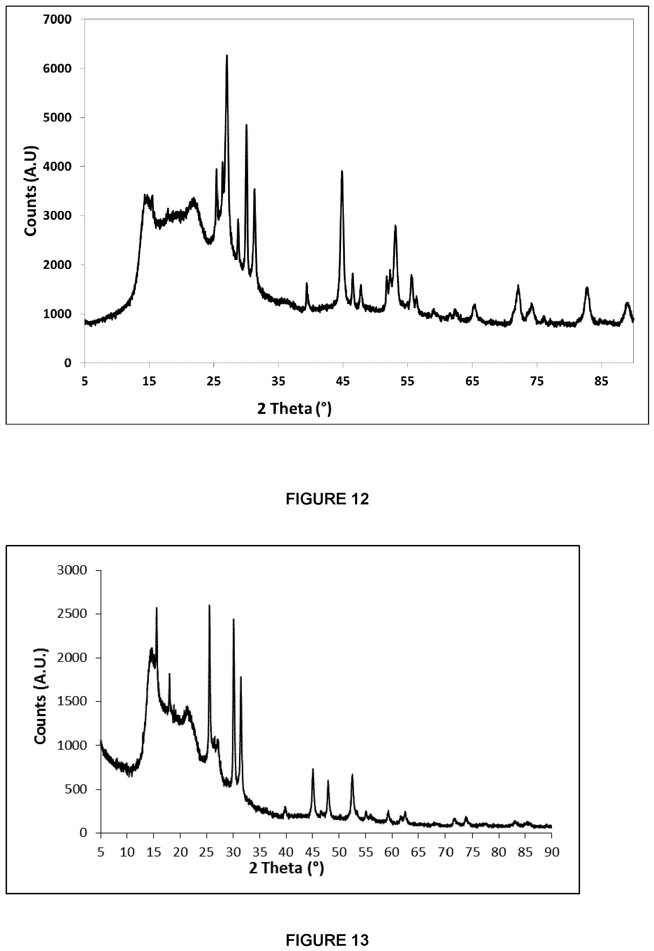

Figure 12: XRD data of powder of example 3.
Figure 13: XRD data of powder of example 4.

### EXAMPLES

The examples below serve to illustrate the invention, but have no limiting character.

### X-Ray Diffraction:

The XRD diffractograms of the powders were acquired on a XRD goniometer in the Bragg Brentano geometry, with a Cu X Ray tube (Cu Kalpha wavelength of 1.5406 Å). The setup may be used in different optical configurations, *i.e.* with variable or fixed divergence slits, or Soller slits. A filtering device on the primary side may also be used, like a monochromator or a Bragg Brentano HD optics from Panalytical. If variable divergence slits are used; the typical illuminated area is 10 mm × 10 mm. The sample holder is loaded on a spinner; rotation speed is typically 60 rpm during the acquisition. Tube settings were operating at 40 kV/30 mA for variable slits acquisition and at 45 kV/40 mA for fixed slits acquisition with incident Bragg Brentano HD optics. Acquisition step was 0.017° per step. Angular range is typically 5° to 90° in two theta or larger. Total acquisition time was typically 30 min or longer.

The powders are covered by a Kapton film to prevent reactions with air moisture.

### Conductivity measurements:

The conductivity was acquired on pellets done using a uniaxial press operated at 500MPa.

The measurement is done under a loading of 40MPa and two carbon paper foils are used as current collector in a pressure cell from MTI (BATTE-CELL-0067 EQ-PSC-15-P).

The impedance spectra are acquired on a Biologic VMP3 device and the control of temperature is ensured by a Binder climatic chamber. Duration of two hours is set to allow the temperature to be equilibrated between two measurements.

Impedance spectroscopy is acquired in PElS mode with an amplitude of 10mV and a range of frequencies from 1 MHz to 1kHz (25 points per decade and a mean of 50 measurements per frequency point.)

### Liquid state NMR

³¹P solution NMR spectra were recorded on a Bruker 300 MHz spectrometer equipped with a QNP Z-GRD Z8352/107 probe. Relaxation time was 7 s. Spectra were de-coupled from ¹H.

### Solid-State NMR

Solid-State NMR spectra were recorded on a Bruker Avance 400 spectrometer equipped with a high-speed DVT4 probe. ³¹P and ⁶Li measurements were performed by magic-angle-spinning (MAS) at a speed of 10 kHz, in single-pulse mode with a relaxation time D1 depending on the experiment (see Example below). ⁷Li measurements were performed in the static, single-pulse mode with a relaxation time D1 = 120 s. Reference for ³¹P NMR was 85% H₃PO₄, for ⁶Li NMR a 5 mol L⁻¹ aqueous LiCI solution.

### Example 1

LiCI (229 mg, Sigma-Aldrich) and Li₂S (620 mg, Albemarle) were weighed in a 100 mL Schlenk flask, in an Ar-filled glove box with oxygen and moisture levels both below 1 ppm. The flask was then taken out of the glove box and connected to a N₂ / vacuum line. 35 mL of anhydrous ethanol (Merck Seccosolv^{®}, water content below 50 ppm) were added into this flask through a glass syringe. The resulting mixture was stirred under inert atmosphere (N₂). Complete dissolution of the reactants took ca. 20 min.

P₂S₅ (600 mg, Sigma-Aldrich, 99% purity) was weighed in a 100 mL three-necked flask equipped with an addition funnel. It was cooled to -80°C for 30 min using a dry ice / acetone bath, then the above Li/S/CI solution was transferred into the addition funnel and added rapidly. P₂S₅ dissolved within ca. 10 min, leading to a clear yellow solution.

The solution was then stirred for 6 h while keeping the temperature at -80°C. No further change was observed. 600 µL samples of the reaction medium were taken after 1, 3 and 6 hours for ³¹P NMR monitoring (Bruker 300 MHz spectrometer equipped with a QNP Z-GRD Z8352/107 probe). The solvent was then slowly removed under primary vacuum, first at room temperature, then when the solution was concentrated to ca. 60% of its initial volume the temperature was increased to 50°C, and left at this value overnight. The resulting product was a pale yellow powder. It was characterized by powder X-ray diffraction (Panalytical), solid-state ³¹P, ¹H and ⁶Li MAS NMR, and solid-state ⁷Li static NMR (Bruker NEO 400 spectrometer equipped with a 4 mm BL4 probe).

### Example 2

A quartz tube of length 250 mm, inner diameter 10 mm and wall thickness 1.1 mm was closed at one end using a torch fueled by propane and oxygen. This tube was taken into an Ar-filled glove box with oxygen and moisture levels both below 1 ppm, and filled with 250 mg of a material prepared by following Example 1. The tube was then equipped with a PVC hose adapter closed by a valve, taken out of the glove box and connected to a vacuum line through the valve. The system was set under vacuum. When vacuum reached 1 mbar, the tube was sealed using the propane/oxygen torch. The sealed tube was heated in a muffle furnace following a 2°C/min ramp up to 550°C, and kept at this value for 5 h. After it had cooled down to 30°C it was transferred into an Ar-filled glove box and cut with a tungsten carbide cutter, in order to collect the product as a grey powder. This powder was characterized by X-ray diffraction, solid-state ³¹P, ⁶Li and ¹H MAS NMR and solid-state static ⁷Li NMR.

Lithium ion conductivity has been measured by impedance spectroscopy on a pellet of this material, it reaches σ = 1.3×10⁻³ S.cm⁻¹ at 30°C, with an activation energy of 0.43 eV.

### Example 3 (comparative)

LiCI (229 mg, Sigma-Aldrich) and Li₂S (620 mg, Albemarle) were weighed in a 100 mL Schlenk flask, in an Ar-filled glove box with oxygen and moisture levels both below 1 ppm. The flask was then connected on a N₂/vacuum line and 35 mL of anhydrous ethanol (Merck Seccosolv^{®}, water content below 50 ppm) were added. The mixture was stirred under inert atmosphere (N₂).

P₂S₅ (600 mg, Sigma-Aldrich, 99% purity) was weighed in a 100 mL Schlenk flask equipped with an addition funnel. The above Li/S/CI solution was then transferred into the addition funnel and added rapidly. P₂S₅ dissolved within ca. 10 min, leading to a clear yellow solution. A ³¹P NMR spectrum was then recorded on 600 µL of the reaction medium.

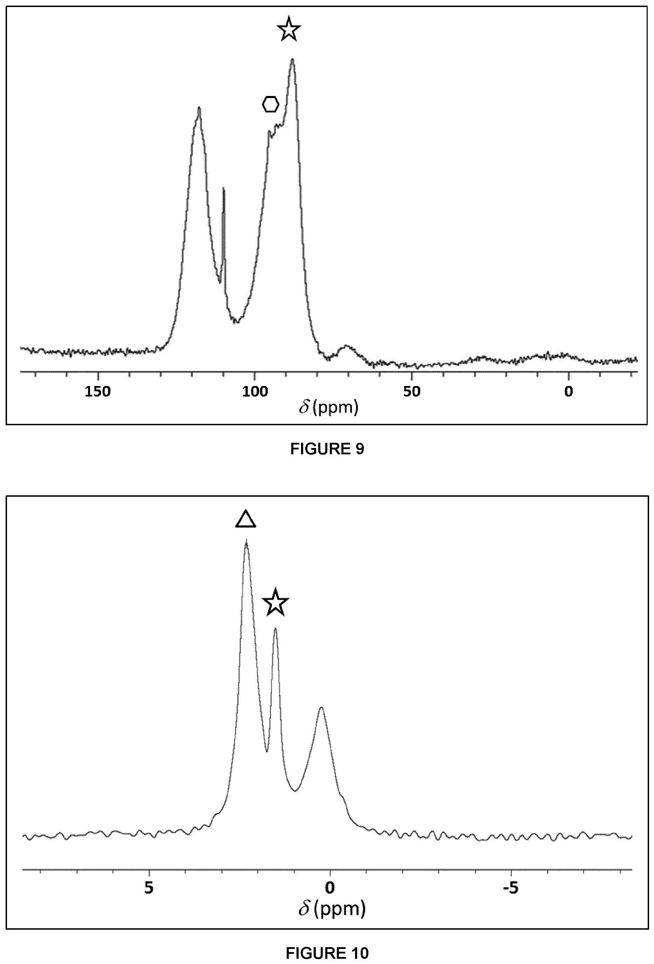

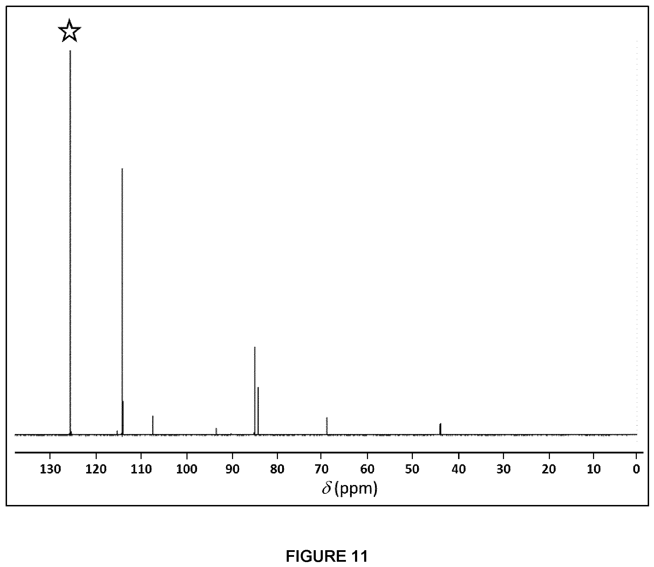

The solution was then stirred for 2 h at room temperature (22°C). No further change was observed. After this time, another 600 µL sample of the solution was taken and characterized by ³¹P NMR. The solution contains a high amount of impurities / by-products as seen on ³¹P solution NMR (figure 11), especially the signal at 114 ppm. The solvent was then removed under vacuum, first at room temperature, then when the solution was concentrated to ca. 60% of its initial volume the temperature was increased to 45°C, eventually when most of the ethanol was gone to 80°C, and kept at this value for another 3.5 h. The resulting product was a white paste. This paste was then heated to 100°C on the vacuum line for 3.5 h and turned into a white powder. The obtained powder contains a high amount of impurities / by-products as seen on ³¹P solid NMR (figure 9).

### Example 4

LiCI (344 mg, Sigma-Aldrich), Li₂S (930 mg, Albemarle) and elemental sulfur (135 mg, AnalR NORMAPUR^{®}, VWR Chemicals) were weighed together in a 100 mL Schlenk flask, in an Ar-filled glove box with oxygen and moisture levels both below 1 ppm. 30 g of anhydrous ethanol (VWR, water content below 30 ppm) were added to the mixture. The flask was then taken out of the glove box and connected to a N₂ / vacuum line. The resulting mixture was stirred under inert atmosphere (N₂), at 0 °C (water/ice bath). Complete dissolution of the reactants took ca. 15 min, resulting in a deep yellow solution, which was then stirred for another 20 min at 0 °C.

P₂S₅ (600 mg, Sigma-Aldrich, 99% purity) was weighed in a 100 mL Schlenk flask. The flask was cooled to -15°C for 30 min using a sodium chloride / ice bath, then the above Li/S/CI solution was rapidly added through a Teflon^{®} cannula. P₂S₅ dissolved within 5 min, leading to a deep yellow solution.

This solution was stirred for 3 h 45 min while keeping the temperature between -15°C and -10°C. The reaction medium was then set under dynamic primary vacuum, and the temperature was increased to 180°C (silicon oil bath on hotplate) to remove the solvent. The temperature of 180°C was reached after 30 min, and kept at this value for another 2 h. The resulting product was a dry, grey powder. This powder was characterized by X-ray diffraction and solution ³¹P NMR.

Lithium ion conductivity has been measured by impedance spectroscopy on a pellet of this material, it reaches σ = 1×10⁻⁴ S.cm⁻¹ at 30°C, with an activation energy of 0.42 eV.

## Claims

1. A method for preparing Li₆PS₅X, wherein X is halogen, comprising at least one step for the preparation of a solution S1 at a temperature T1 comprised from - 200°C to 10°C, said solution S1 comprising a solvent and at least P species under the form of (PS₄)³⁻, Li species under the form of Li⁺, X species under the form of X-and remaining sulfur under the form of polysulfide, followed by a step for removing at least a portion of the solvent from said solution S1 to obtain Li₆PS₅X.

2. The method according to claim 1, wherein the solution S1 is obtained by admixing lithium sulfide, phosphorus sulfide, and a halogen compound in the solvent, at a temperature comprised from -200°C to 10°C.

3. The method according to claim 1, wherein the solution S1 is obtained from the following steps:
- obtaining a precursor solution by admixing lithium sulfide and a halogen compound in the solvent; and
- adding phosphorus sulfide into said precursor solution at a temperature comprised from -200°C to 10°C; in order to obtain said solution S1.

4. The method according to any one of claims 1 to 3, wherein the step for removing at least a portion of the solvent from S1 is carried out at a temperature comprised from 30°C to 200°C.

5. The method according to any one of claims 1 to 4, wherein the preparation of the solution S1 occurs in an inert atmosphere, under vacuum or under H₂S flow.

6. The method according to any one of claims 1 to 5, wherein Li₆PS₅X is then thermally treated at a temperature comprised from 150°C to 700°C.

7. The method according to any one of claims 1 to 6, wherein the solvent is able to dissolve Li₆PS₅X, lithium sulfide, phosphorus sulfide and a halogen compound.

8. The method according to any one of claims 1 to 7, wherein the solvent is an aliphatic alcohol.

9. The method according to any one of claims 1 to 8, wherein the solvent is chosen in the group consisting of: ethanol, methanol, and mixtures thereof.

10. The method according to any one of claims 1 to 9, wherein the temperature T1 is comprised from -110°C to 0°C, preferably from -110°C to -10°C, in particular from -100°C to -50°C.

11. The method according to any one of claims 2 to 10, wherein the halogen compound is chosen in the group consisting of: LiCI, LiBr, Lil, and LiF.

12. The method according to any one of claims 1 to 11, wherein the solution S1 comprises at least 50% mol. of Li species under the form of Li⁺, with respect to the total amount in moles of lithium sulfide added in the solvent, preferably at least 80% mol. of Li species under the form of Li⁺, more preferably at least 95% mol. of Li species under the form of Li⁺.

13. The method according to any one of claims 1 to 12, wherein the solution S1 comprises at least 50% mol. of P species under the form of (PS₄)³⁻, with respect to the total amount in moles of phosphorus sulfide added in the solvent, preferably at least 80% mol. of P species under the form of (PS₄)³⁻, more preferably at least 95% mol. of P species under the form of (PS₄)³⁻.

14. The method according to any one of claims 1 to 13, wherein the solution S1 comprises at least 50% mol. of X species under the form of X⁻, with respect to the total amount in moles of halogen compound added in the solvent, preferably at least 80% mol. of X species under the form of X⁻, more preferably at least 95% mol. of X species under the form of X⁻.

15. The method according to anyone of claims 1 to 14, wherein the temperature T1 is comprised from -100°C to -50°C and the step for removing at least a portion of the solvent from the solution S1 is carried out at a temperature comprised from 35°C to 65°C.

## Patentansprüche

1. Verfahren zur Herstellung Li₆PS₅X, wobei X Halogen ist, umfassend wenigstens einen Schritt zur Herstellung einer Lösung S1 bei einer Temperatur T1 in dem Bereich von -200 °C bis 10 °C, wobei die Lösung S1 ein Lösungsmittel und wenigstens P-Spezies in der Form von (PS₄)³⁻, Li-Spezies in der Form von Li⁺, X-Spezies in der Form von X⁻ und restlichen Schwefel in der Form von Polysulfid umfasst, gefolgt von einem Schritt zum Entfernen wenigstens eines Teils des Lösungsmittels aus der Lösung S1, um Li₆PS₅X zu erhalten.

2. Verfahren gemäß Anspruch 1, wobei die Lösung S1 durch Mischen von Lithiumsulfid, Phosphorsulfid und einer Halogenverbindung in dem Lösungsmittel bei einer Temperatur in dem Bereich von -200 °C bis 10 °C erhalten wird.

3. Verfahren gemäß Anspruch 1, wobei die Lösung S1 durch die folgenden Schritte erhalten wird:
- Erhalten einer Vorläuferlösung durch Mischen von Lithiumsulfid und einer Halogenverbindung in dem Lösungsmittel; und
- Zugeben von Phosphorsulfid zu der Vorläuferlösung bei einer Temperatur in dem Bereich von -200 °C bis 10 °C; um die Lösung S1 zu erhalten.

4. Verfahren gemäß einem der Ansprüche 1 bis 3, wobei der Schritt zum Entfernen wenigstens eines Teils des Lösungsmittels aus S1 bei einer Temperatur in dem Bereich von 30 °C bis 200 °C durchgeführt wird.

5. Verfahren gemäß einem der Ansprüche 1 bis 4, wobei die Herstellung der Lösung S1 in einer inerten Atmosphäre, unter Vakuum oder unter H₂S-Strom erfolgt.

6. Verfahren gemäß einem der Ansprüche 1 bis 5, wobei Li₆PS₅X anschließend bei einer Temperatur in dem Bereich von 150 °C bis 700 °C wärmebehandelt wird.

7. Verfahren gemäß einem der Ansprüche 1 bis 6, wobei das Lösungsmittel fähig ist, Li₆PS₅X, Lithiumsulfid, Phosphorsulfid und eine Halogenverbindung zu lösen.

8. Verfahren gemäß einem der Ansprüche 1 bis 7, wobei das Lösungsmittel ein aliphatischer Alkohol ist.

9. Verfahren gemäß einem der Ansprüche 1 bis 8, wobei das Lösungsmittel ausgewählt ist aus der Gruppe bestehend aus: Ethanol, Methanol und Gemischen davon.

10. Verfahren gemäß einem der Ansprüche 1 bis 9, wobei die Temperatur T1 in dem Bereich von -110 °C bis 0 °C, vorzugsweise von -110 °C bis -10 °C, insbesondere von -100 °C bis -50 °C, liegt.

11. Verfahren gemäß einem der Ansprüche 2 bis 10, wobei die Halogenverbindung ausgewählt ist aus der Gruppe bestehend aus: LiCl, LiBr, LiI und LiF.

12. Verfahren gemäß einem der Ansprüche 1 bis 11, wobei die Lösung S1 wenigstens 50 mol-% an Li-Spezies in der Form von Li⁺, bezogen auf die Gesamtmolmenge an zugegebenem Lithiumsulfid in dem Lösungsmittel, vorzugsweise wenigstens 80 mol-% an Li-Spezies in der Form von Li⁺, bevorzugter wenigstens 95 mol-% an Li-Spezies in der Form von Li⁺, umfasst.

13. Verfahren gemäß einem der Ansprüche 1 bis 12, wobei die Lösung S1 wenigstens 50 mol-% an P-Spezies in der Form von (PS₄)³⁻, bezogen auf die Gesamtmolmenge an zugegebenem Phosphorsulfid in dem Lösungsmittel, vorzugsweise wenigstens 80 mol-% an P-Spezies in der Form von (PS₄)³⁻, bevorzugter wenigstens 95 mol-% an P-Spezies in der Form von (PS₄)³⁻, umfasst.

14. Verfahren gemäß einem der Ansprüche 1 bis 13, wobei die Lösung S1 wenigstens 50 mol-% an X-Spezies in der Form von X⁻, bezogen auf die Gesamtmolmenge an zugegebener Halogenverbindung in dem Lösungsmittel, vorzugsweise wenigstens 80 mol-% an X-Spezies in der Form von X⁻, bevorzugter wenigstens 95 mol-% an X-Spezies in der Form von X⁻, umfasst.

15. Verfahren gemäß einem der Ansprüche 1 bis 14, wobei die Temperatur T1 in dem Bereich von -100 °C bis -50 °C liegt und der Schritt zum Entfernen wenigstens eines Teils des Lösungsmittels aus der Lösung S1 bei einer Temperatur in dem Bereich von 35 °C bis 65 °C durchgeführt wird.

## Revendications

1. Procédé pour la préparation de Li₆PS₅X, X étant un halogène, comprenant au moins une étape pour la préparation d'une solution S1 à une température T1 comprise entre -200 °C et 10 °C, ladite solution S1 comprenant un solvant et au moins une espèce de P sous la forme de (PS₄)³⁻, une espèce de Li sous la forme de Li⁺, une espèce de X sous la forme de X⁻ et le reste étant du soufre sous la forme de polysulfure, suivie par une étape pour l'élimination d'au moins une partie du solvant de ladite solution S1 pour obtenir Li₆PS₅X.

2. Procédé selon la revendication 1, la solution S1 étant obtenue en mélangeant du sulfure de lithium, du sulfure de phosphore et un composé d'halogène dans le solvant, à une température comprise entre -200 °C et 10 °C.

3. Procédé selon la revendication 1, la solution S1 étant obtenue par les étapes suivantes :
- obtention d'une solution de précurseur en mélangeant du sulfure de lithium et un composé d'halogène dans le solvant ; et
- ajout de sulfure de phosphore dans ladite solution de précurseur à une température comprise entre -200 °C et 10 °C ; afin d'obtenir ladite solution S1.

4. Procédé selon l'une quelconque des revendications 1 à 3, l'étape pour l'élimination d'au moins une partie du solvant de S1 étant mise en œuvre à une température comprise entre 30 °C et 200 °C.

5. Procédé selon l'une quelconque des revendications 1 à 4, la préparation de la solution S1 ayant lieu dans une atmosphère inerte, sous vide ou sous un flux de H₂S.

6. Procédé selon l'une quelconque des revendications 1 à 5, Li₆PS₅X étant ensuite traité thermiquement à une température comprise entre 150 °C et 700 °C.

7. Procédé selon l'une quelconque des revendications 1 à 6, le solvant étant capable de dissoudre Li₆PS₅X, le sulfure de lithium, le sulfure de phosphore et un composé d'halogène.

8. Procédé selon l'une quelconque des revendications 1 à 7, le solvant étant un alcool aliphatique.

9. Procédé selon l'une quelconque des revendications 1 à 8, le solvant étant choisi dans le groupe constitué par : éthanol, méthanol et des mélanges correspondants.

10. Procédé selon l'une quelconque des revendications 1 à 9, la température T1 étant comprise entre -110 °C et 0 °C, préférablement entre -110 °C et -10 °C, en particulier entre -100 °C et -50 °C.

11. Procédé selon l'une quelconque des revendications 2 à 10, le composé d'halogène étant choisi dans le groupe constitué par : LiCl, LiBr, LiI et LiF.

12. Procédé selon l'une quelconque des revendications 1 à 11, la solution S1 comprenant au moins 50 % en moles d'espèce de Li sous la forme de Li⁺, par rapport à la quantité totale en moles de sulfure de lithium ajouté dans le solvant, préférablement au moins 80 % en moles d'espèce de Li sous la forme de Li⁺, plus préférablement au moins 95 % en moles d'espèce de Li sous la forme de Li⁺.

13. Procédé selon l'une quelconque des revendications 1 à 12, la solution S1 comprenant au moins 50 % en moles d'espèce de P sous la forme de (PS₄)³⁻, par rapport à la quantité totale en moles de sulfure de phosphore ajouté dans le solvant, préférablement au moins 80 % en moles d'espèce de P sous la forme de (PS₄)³⁻, plus préférablement au moins 95 % en moles d'espèce de P sous la forme de (PS₄)³⁻.

14. Procédé selon l'une quelconque des revendications 1 à 13, la solution S1 comprenant au moins 50 % en moles d'espèce de X sous la forme de X⁻, par rapport à la quantité totale en moles de composé d'halogène ajouté dans le solvant, préférablement au moins 80 % en moles d'espèce de X sous la forme de X⁻, plus préférablement au moins 95 % en moles d'espèce de X sous la forme de X⁻.

15. Procédé selon l'une quelconque des revendications 1 à 14, la température T1 étant comprise entre -100 °C et -50 °C et l'étape pour l'élimination d'au moins une partie du solvant de la solution S1 étant mise en œuvre à une température comprise entre 35 °C et 65 °C.
